# EUROPÄISCHE PATENTSCHRIFT

(11) **EP 1 404 949 B1**
(45) Veröffentlichungstag und Bekanntmachung des Hinweises auf die Patenterteilung: **11.08.2010**
(21) Anmeldenummer: 02740379.9
(22) Anmeldetag: 25.05.2002
(51) Int. Cl.: F01N 3/28, F01N 3/20, F01N 13/08, B01F 5/04

(54) **MISCHEINRICHTUNG FÜR EINE ABGASREINIGUNGSANLAGE**
MIXING DEVICE FOR AN EXHAUST GAS PURIFICATION SYSTEM
DISPOSITIF DE MELANGE DESTINE A UN SYSTEME D'EPURATION DE GAZ D'ECHAPPEMENT

(30) Priorität: 30.06.2001 DE 10131803
(43) Veröffentlichungstag der Anmeldung: 07.04.2004
(73) Patentinhaber: ROBERT BOSCH GMBH, 70442 Stuttgart (DE)
(72) Erfinder: RIPPER, Wolfgang, 70327 Stuttgart (DE); MAHR, Bernd, 73207 Plochingen (DE); SCHALLER, Johannes, 71229 Leonberg (DE); SCHARSACK, Cord, 71101 Schoenaich (DE); PRASSER, Thomas, 71384 Weinstadt (DE)
(86) Internationale Anmeldenummer: PCT/DE2002/001924
(87) Internationale Veröffentlichungsnummer: WO 2003/004839

(56) Entgegenhaltungen:
- EP-A- 0 256 965
- EP-A- 0 956 895
- EP-A- 1 054 139
- DE-C- 19 806 265
- SU-A- 1 211 361
- US-A- 4 498 786
- US-A- 5 947 081
- US-A- 6 135 629

## Beschreibung

### Stand der Technik

Die Erfindung geht aus von einer Mischeinrichtung bzw. einer Abgasreinigungsanlage nach der Gattung der unabhängigen Ansprüche. Zur Entstickung des Abgases insbesondere von Dieselmotoren ist es bekannt, ein Reduktionsmittel, insbesondere eine wässrige Harnstofflösung, in den Abgastrakt einzuführen. Hierbei wird beispielsweise an einem Hydrolysekatalysator Ammoniak aus dem Harnstoff gewonnen, und das Ammoniak reagiert selektiv an einem sogenannten SCR-Katalysator mit den im Abgas enthaltenen Stickoxiden zu molekularem Stickstoff und Wasser (SCR ist eine Abkürzung für den englischen Ausdruck "selective catalytic reduction", auf Deutsch: selektive katalytische Reduktion). Zur Mischung des Reduktionsmittels mit dem Abgas ist aus der EP 08 945 23 schon eine Mischeinrichtung bekannt, die jedoch einen hohen Strömungswiderstand aufweist. Aus der DE 198 06 265 ist es bekannt, eine Platte vorzusehen, die einen Winkel von 45 Grad mit der Hauptströmungsrichtung des Abgases bildet.

Die EP 956895 beschreibt eine Vorrichtung zur Reduktion von Stickoxiden mit einem statischen Mischer in einem Rauchgaskanal, wobei der statische Mischer ein flächenförmiges Mischelement aufweist. Dieses Mischelement ist dabei entweder flach ausgebildet oder weist die Form eines Omegas auf, d.h. im letzteren Fall weist es zumindest einen konkaven Bereich auf, der dem Abgasstrom einen hohen Strömungswiderstand entgegen stellt.

### Vorteile der Erfindung

Die erfindungsgemäße Mischeinrichtung bzw. Abgasreinigungsanlage mit den kennzeichnenden Merkmalen der unabhängigen Ansprüche hat dem gegenüber den Vorteil, das Strömungsprofil des Abgases nicht nachteilig zu beeinflussen, dem Abgas nur einen geringen Strömungswiderstand entgegenzustellen sowie eine gute Gleichverteilung des Reduktionsmittels im Abgastrakt zu gewährleisten. Darüber hinaus wird es vermieden, dass die gegenüberliegende Wand des Abgasrohrs mit Reduktionsmittel bespritzt wird; das Reduktionsmittel wird von dem auf dem Mischkörper entlanggleitenden Abgasstrom mitgerissen und ausgehend vom Zentrum des Abgasrohrs gleichmäßig verteilt. Dies führt auch zu einem besseren Dynamikverhalten, da kein Reduktionsmittel von der Wand nachträglich abdampfen kann. Das Vorsehen einer Gasaufprallfläche und einer separaten Strahlaufprallfläche erlaubt darüber hinaus die Einstellung einer Strömungsführung, die eine Optimierung der Gemischbildung gewährleistet. Darüber hinaus erreicht der Reduktionsmittelstrahl den Mischkörper in allen Betriebspunkten auf der hierfür vorgesehenen und in ihrer Raumorientierung hierfür optimierbaren Strahlaufprallfläche.

Durch die in den abhängigen Ansprüchen und in der Beschreibung aufgeführten Maßnahmen sind vorteilhafte Weiterbildungen und Verbesserungen der in den unabhängigen Ansprüchen angegebenen Mischeinrichtung bzw. Abgasreinigungsanlage möglich.

Werden beispielsweise als Leitschaufeln ausgebildete Verstrebungen vorgesehen, so kann der Abgasstrom zusätzlich mit einem Drall beaufschlagt werden, der in vorteilhafter Weise die Vermischung des Abgases mit dem Reduktionsmittel weiter unterstützt.

### Zeichnung

Die Erfindung ist in der Zeichnung dargestellt und in der nachfolgenden Beschreibung näher erläutert. Es zeigen Figur 1 einen Ausschnitt einer Abgasreinigungsanlage, Figur 2 eine Draufsicht auf eine Mischeinrichtung, Figur 3 einen Ausschnitt aus einer weiteren Abgasreinigungsanlage und Figur 4a bis c ein Ausführungsbeispiel.

### Beschreibung der Ausführungsbeispiele

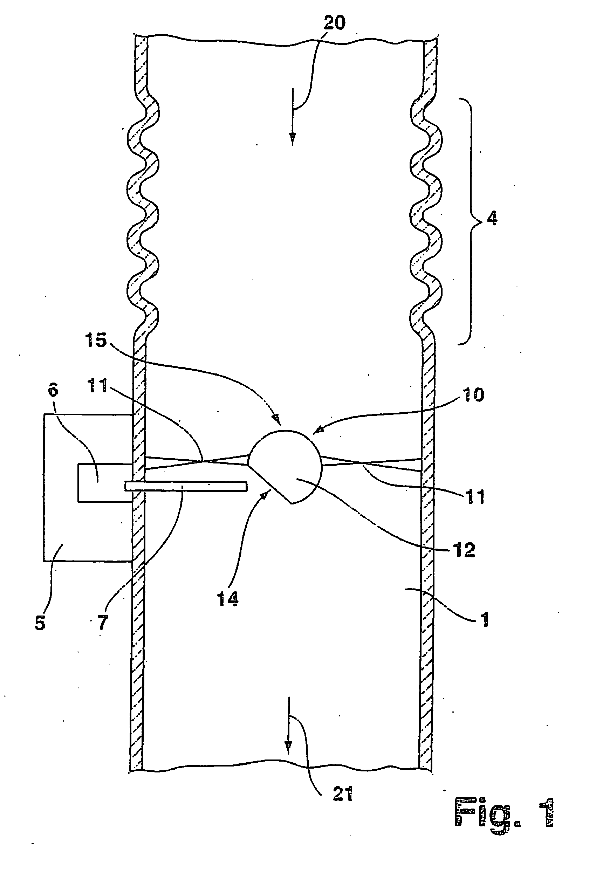

Die Figur 1 zeigt in einer Querschnittsseitenansicht ein Abgasrohr 1, das einen gewellten Bereich 4 aufweist. Der mit dem Bezugszeichen 20 markierte Pfeil symbolisiert den von einer Brennkraftmaschine stammenden Abgasstrom. Dem gewellten Bereich 4 nachgeordnet ist eine Mischeinrichtung 10, die einen kugelkalottenfönmigen Mischkörper 12 aufweist. Dieser Mischkörper ist über zwei Leitschaufeln 11 mit dem Abgasrohr verbunden. Die Kugeloberfläche der Kugelkalotte ist dem Abgasstrom 20 zugewandt und wird im Folgenden als Gasaufprallfläche 15 bezeichnet. Eine ebene Strahlaufprallfläche 14 des Mischkörpers 12 befindet sich auf der dem Abgasstrom 20 abgewandten Seite des Mischkörpers. Auf der Höhe der Mischeinrichtung 10 ist auf der Außenseite des Abgasrohrs eine Reduktionsmittel-Dosiereinrichtung 5 montiert, deren Einspritzventil 6 ein in das Abgasrohr hineinragendes Einspritzrohr 7 mit einem Reduktionsmittel, beispielsweise Harnstoff, versorgen kann. Der Pfeil 21 markiert den Strom eines Abgas-Reduktionsmittel-Gemischs.

Die Dosiereinrichtung 5 führt dem Abgasstrom ein Reduktionsmittel zu, wobei die Zugabe dosiert mittels des Einspritzventils 6 erfolgt. Hierbei wird der Strahl des Reduktionsmittels ohne vorherige Vermischung mit Luft direkt auf die Strahlaufprallfläche 14 gerichtet. Der Flächeninhalt und die Anordnung der Fläche relativ zum Einspritzrohr 7 ist dabei so bemessen, dass unabhängig vom sich ändernden Abgasvolumenstrom das Reduktionsmittel stets auf die Strahlaufprallfläche trifft. Die sich an die Gasaufprallfläche 15 anlegende Strömung des Abgases weht das Reduktionsmittel in die Strömung und sorgt für eine optimierte Durchmischung. Die Leitschaufeln 11 erzeugen eine zusätzliche Drallströmung im Abgasstrom, um die Vermischung des Reduktionsmittels mit dem Abgas zusätzlich zu fördern. Das so entstehende Abgas-Reduktionsmittel-Gemisch 21 strömt in einem nachfolgend angeordneten, nicht näher dargestellten SCR-Katalysator zur Entstickung des Abgases. Der gewellte Bereich 4, den der Abgasstrom 20 vor Erreichen der Mischeinrichtung durchläuft, erzeugt Turbulenzen im strömenden Gas, die die Vermischung von Abgas und Reduktionsmittel ebenfalls zusätzlich unterstützen.

Die Mischeinrichtung 10 kann auch zur Vermischung des Abgases mit nachmotorisch in den Abgastrakt eingespritzten Kraftstoff verwendet werden, um in Verbindung mit nachgeordneten Katalysatoren und/oder Partikelfiltern eine effektive Abgasnachbehandlung durchzuführen. Der gewellte Bereich 4 kann in einfachen Anordnungen auch weggelassen werden, ebenso können die Verstrebungen als Stangen oder Metallbänder ohne Leitschaufeln ausgebildet sein.

Die Mischvorrichtung kann auch so angeordnet sein, dass die Strahlaufprallfläche dem Abgasstrom zugewandt ist, so dass die Strahlaufprallfläche auf der dem Abgasstrom zugewandten Seite der Mischvorrichtung mit dem Reduktionsmittelstrahl beaufschlagt werden kann.

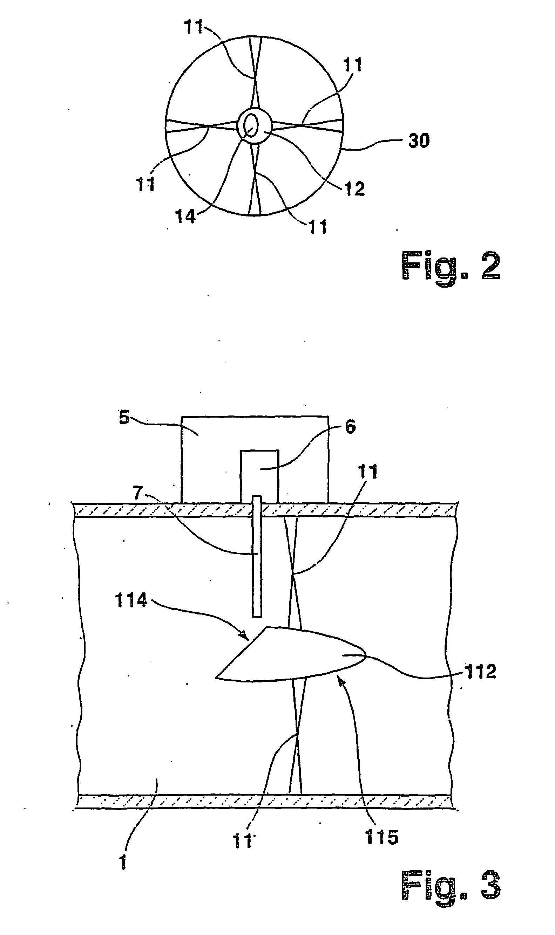

Figur 2 zeigt eine Draufsicht auf eine Mischeinrichtung ähnlich zu der in Figur 1 abgebildeten Einrichtung, bei der jedoch statt zwei vier als Leitschaufeln 11 ausgebildete Verstrebungen vorgesehen sind. Diese Verstrebungen sind nicht unmittelbar mit dem Abgasrohr, sondern mit einem Metallband 30 verbunden, das den Mischkörper 12 kreisförmig umläuft. In der gezeigten Darstellung ist das Metallband nur als Linie zu erkennen. Der Radius des geschlossenen Metallbandumlaufs ist dabei so gewählt, dass die Mischeinrichtung passgenau in das Abgasrohr eingeführt werden kann und lediglich das Metallband noch mit Nieten oder Schrauben oder durch Verschweißen im Abgasrohr befestigt werden muss.

Die Mischeinrichtung nach Figur 2 übt die gleiche Funktion aus wie die nach Figur 1, lediglich die Art der Montage ist etwas variiert. In einer weiteren alternativen Ausführungsform ist es vorgesehen, das Metallband 30 in Form eines Abgasrohrabschnitts auszubilden, in das bereits das Einspritzrohr 7 integriert ist, so dass bei der Montage lediglich noch die Mischeinrichtung mit den jeweiligen Abgasrohrenden sowie mit der Dosiermitteleinrichtung verbunden werden muss.

Figur 3 zeigt eine Abgasreinigungsanlage, bei der der Mischkörper 112 nicht eine Kugelkalottenform sondern eine Kegelkalottenform aufweist. Die Spitze des Kegels ist etwas abgerundet; sie bildet die dem von der Brennkraftmaschine kommenden Abgas zugewandte Gasaufprallfläche 115 des Mischkörpers 112. Die ebene Strahlaufprallfläche 114 ist ebenfalls wie bei der Kugelkalotte als Abfräsung eines kegelförmigen Grundkörpers darstellbar.

Im Vergleich zu einem kugelkalottentörmigen Grundkörper weist der Mischkörper 112 einen weiter verringerten Strömungswiderstand auf und gewährleistet weiterhin eine gleichmäßige Verteilung des Reduktionsmittels und dessen Vermischung mit dem Abgas.

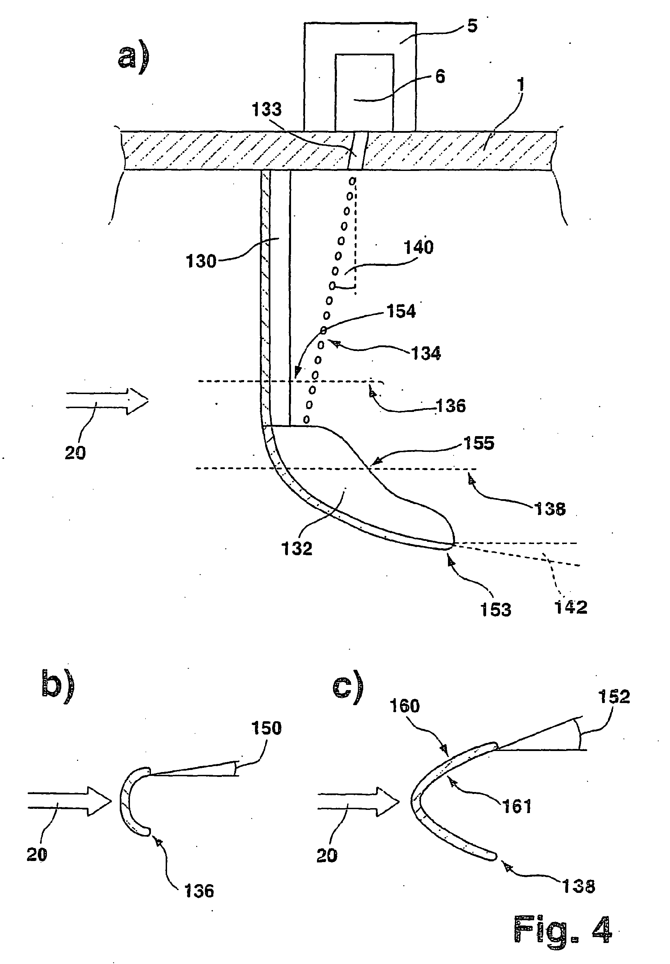

Figur 4 zeigt im Teilbild a) eine Querschnittsseitenansicht auf eine erfindungsgemäße Mischeinrichtung mit einem im Inneren eines Abgasrohrs angeordneten, im Folgenden als Prallvorrichtung 132 bezeichneten Mischkörper, der mittels einer im Folgenden als Haltevorrichtung 130 bezeichneten Verstrebung an der Seitenwandung 1 des Abgasrohrs befestigt ist. In den Teilbildern b) und c) sind die im Teilbild a) mit den Bezugszeichen 136 beziehungsweise 138 versehenen Schnitte dargestellt. Sowohl die Haltevorrichtung als auch die Prallvorrichtung bilden zum von der Brennkraftmaschine strömenden Abgasstrom 20 hin eine gewölbte Fläche bzw. eine gewölbte Gasaufprallfläche 160, entlang der das Abgas mit niedrigem Strömungswiderstand an der Mischeinrichtung vorbeigeleitet werden kann. Während die Haltevorrichtung einen im Wesentlichen halbkreisförmigen Querschnitt aufweist und von der Abgasrohrwandung ausgehend quer zum Abgasstrom in das Abgasrohr hineinragt, hat die Prallvorrichtung 132 die Form einer Schaufel, auf deren Innen- oder Strahlaufprallfläche 161 der aus der Austrittsöffnung 133 mit einem Winkel 140 gegen den Abgasrohrquerschnitt austretende Reduktionsmittel-Schnurstrahl 134 auftreffen kann. Der Endbereich 153 der Prallvorrichtung ist mit einem kleinen Winkel 142 gegen die Richtung des Abgasstroms 20 geneigt, der zwischen 0 und 30 Grad liegt. Die Randzonen 154 und 155 der Halte- beziehungsweise der Prallvorrichtung weisen kleine Winkel 150 beziehungsweise 152 relativ zur Strömungsrichtung 20 des Abgases auf, die typischerweise zwischen 0 und 30 Grad betragen.

Die Mischeinrichtung nach Figur 4 gewährleistet eine gleichmässige Verteilung des Reduktionmittels im Abgasrohr, indem der über das Einspritzventil 6 dosierte Reduktionsmittel-Schnurstrahl auf die Prallvorrichtung gespritzt wird. Die Schwankungsbreite des Winkels 140 je nach Stärke der Abgasströmung wird durch die gewölbte Ausführung der Haltevorrichtung 130 und durch einen kleinen Winkel 150 der Randzone der Haltevorrichtung relativ zum Abgasstrom klein gehalten. Auch die dem Abgasstrom zugewandte Seite der Prallvorrichtung weist im Bereich der Randzone 155 beziehungsweise im Endbereich 153 kleine Winkel 142 bzw. 152 auf. Eine derartige Ausformung der Prallvorrichtung verhindert, dass der Abgasstrom das Reduktionsmittel von der Innenseite der Prallvorrichtung in Richtung Abgasrohrwand befördert. Damit wird eine unerwünschte Benetzung der Auspuffwand mit Reduktionsmittel unterbunden.

In einer erfindungsgemäßen Ausführungsform bestehen die Halte- und/oder die Prallvorrichtung aus einem Lochblech mit dem Zweck, die Abgasturbulenz zu erhöhen und so die Größe der entstehenden Reduktionsmitteltropfen zu verringern.

## Patentansprüche

1. Mischeinrichtung zur Mischung des in einem Abgasrohr (1) strömenden Abgases einer Brennkraftmaschine mit einem Reduktionsmittel, mit einem im Abgasrohr anordenbaren Mischkörper, wobei der Mischkörper (12; 112; 132) eine Gasaufprallfläche (15; 115; 160) und eine Strahlaufprallfläche (14; 114; 161) aufweist, so dass aus der Brennkraftmaschine strömendes Abgas auf die Gasaufprallfläche und quer zum Abgasstrom zuführbares Reduktionsmittel auf die Strahlaufprallfläche treffen kann, wobei die Strahlaufprallfläche und die Gasaufprallfläche disjunkte Teilbereiche der Oberfläche des Mischkörpers bilden und die Strahlaufprallfläche (14; 114; 161) und die Gasaufprallfläche (15; 115; 160) sich auf gegenüberliegenden Seiten des Mischkörpers befinden, wobei die Gasaufprallfläche (15; 115) gewölbt ist, **dadurch gekennzeichnet, dass** die Gasaufprallfläche derart durch die Oberfläche eines sich zur Strömungsrichtung hin im Abgasrohr zentrisch verjüngenden Teils des Mischkörpers (12; 112; 132) gebildet ist, dass dem Abgas nur ein geringer Strömungswiderstand entgegengestellt wird, und dass eine Haltevorrichtung (11; 130) für den Mischkörper und/oder der Mischkörper (12; 112; 132) die Räume vor und hinter der Mischeinrichtung verbindende Löcher aufweisen.

2. Mischeinrichtung nach Anspruch 1, **dadurch gekennzeichnet, dass** der Mischkörper (12, 112; 133) eine Schaufelform aufweist.

3. Mischeinrichtung nach Anspruch 1 oder 2, **dadurch gekennzeichnet, dass** der Mischkörper so angeordnet werden kann, dass die Strahlaufprallfläche (14; 114; 161) durch einen Oberflächenbereich des Mischkörpers (12; 112; 132) abgasstromabwärts der Gasaufprallfläche (15, 115) gebildet ist.

4. Mischeinrichtung nach einem der vorhergehenden Ansprüche, **dadurch gekennzeichnet, dass** die Haltevorrichtung (11, 130) und/oder der Mischkorper (12, 112, 132) aus einem Lochblech aufgebaut sind.

5. Mischeinrichtung nach einem der vorhergehenden Ansprüche, **dadurch gekennzeichnet, dass** die Haltevorrichtung (11, 130) mindestens eine Verstrebung (130) aufweist und dass diese Verstrebung gewölbt ausgebildet ist.

6. Mischeinrichtung nach einem der vorhergehenden Ansprüche, **dadurch gekennzeichnet, dass** die mindestens eine Verstrebung (130) an ihrem dem Mischkörper (12, 112, 132) abgewandten Ende mit einem den Mischkörper kreisförmig umlaufenden Metallband (30) verbunden ist.

7. Abgasreinigungsanlage zur Reinigung des Abgases einer Brennkraftmaschine, mit einem Abgasrohr (1), einer Einrichtung zur Zufuhr eines Reduktionsmittels in das Abgasrohr und einer Mischeinrichtung zur Vermischung des Abgases mit dem Reduktionsmittel, wobei die Mischeinrichtung einen im Abgasrohr anordenbaren Mischkörper aufweist, wobei der Mischkörper (12; 112; 132) eine Gasaufprallfläche (15; 115; 160) und eine Strahlaufprallfläche (14; 114; 161) aufweist, so dass aus der Brennkraftmaschine strömendes Abgas auf die Gasaufprallfläche und quer zum Abgasstrom zuführbares Reduktionsmittel auf die Strahlaufprallfläche treffen kann, wobei die Strahlaufprallfläche und die Gasaufprallfläche disjunkte Teilbereiche der Oberfläche des Mischkörpers bilden und die Strahlaufprallfläche (14; 114; 161) und die Gasaufprallfläche (15; 115; 160) sich auf gegenüberliegenden Seiten des Mischkörpers befinden, wobei die Gasaufprallfläche (15; 115) gewölbt ist, **dadurch gekennzeichnet, dass** die Gasaufprallfläche derart durch die Oberfläche eines sich zur Strömungsrichtung hin im Abgasrohr verjüngenden Teils des Mischkörpers (12; 112; 132) gebildet ist, dass dem Abgas nur ein geringer Strömungswiderstand entgegengestellt wird, und dass eine Haltevorrichtung (11; 130) für den Mischkörper und/oder der Mischkörper (12; 112; 132) die Räume vor und hinter der Mischeinrichtung verbindende Löcher aufweisen.

## Claims

1. Mixing device for mixing the exhaust gas, which is flowing in an exhaust pipe (1), of an internal combustion engine with a reducing agent, having a mixing body which can be arranged in the exhaust pipe, with the mixing body (12; 112; 132) having a gas impact surface (15; 115; 160) and a jet impact surface (14; 114; 161), such that exhaust gas flowing out of the internal combustion engine can impact against the gas impact surface and reducing agent, which can be supplied transversely with respect to the exhaust-gas flow, can impact against the jet impact surface, with the jet impact surface and the gas impact surface forming disjunctive partial regions of the surface of the mixing body, and with the jet impact surface (14; 114; 161) and the gas impact surface (15; 115; 160) being situated on opposite sides of the mixing body, with the gas impact surface (15; 115) being curved, **characterized in that** the gas impact surface is formed by the surface of a part, which tapers centrally in the exhaust pipe in the flow direction, of the mixing body (12; 112; 132) in such a way that the exhaust gas is subjected to only a small flow resistance, and **in that** a holding device (11; 130) for the mixing body and/or the mixing body (12; 112; 132) have holes which connect the spaces upstream and downstream of the mixing device.

2. Mixing device according to Claim 1, **characterized in that** the mixing body (12; 112; 132) has the shape of a blade.

3. Mixing device according to Claim 1 or 2, **characterized in that** the mixing body can be arranged such that the jet impact surface (14; 114; 161) is formed by a surface region of the mixing body (12; 112; 132) downstream of the gas impact surface in terms of the exhaust-gas flow.

4. Mixing device according to one of the preceding claims, **characterized in that** the holding device (11, 130) and/or the mixing body (12, 112, 132) are constructed from a perforated plate.

5. Mixing device according to one of the preceding claims, **characterized in that** the holding device (11, 130) has a least one strut formation (130), and **in that** said strut formation is of curved design.

6. Mixing device according to one of the preceding claims, **characterized in that** the at least one strut formation (130) is connected, at its end facing away from the mixing body (12, 112, 132), to a metal strip (30) which encircles the mixing body in a circular fashion.

7. Exhaust-gas purification system for purifying the exhaust gas of an internal combustion engine, having an exhaust pipe (1), having a device for supplying a reducing agent into the exhaust pipe and having a mixing device for mixing the exhaust gas with the reducing agent, with the mixing device having a mixing body which can be arranged in the exhaust pipe, with the mixing body (12; 112; 132) having a gas impact surface (15; 115; 160) and a jet impact surface (14; 114; 161), such that exhaust gas flowing out of the internal combustion engine can impact against the gas impact surface and reducing agent, which can be supplied transversely with respect to the exhaust-gas flow, can impact against the jet impact surface, with the jet impact surface and the gas impact surface forming disjunctive partial regions of the surface of the mixing body, and with the jet impact surface (14; 114; 161) and the gas impact surface (15; 115; 160) being situated on opposite sides of the mixing body, with the gas impact surface (15; 115) being curved, **characterized in that** the gas impact surface is formed by the surface of a part, which tapers in the exhaust pipe in the flow direction, of the mixing body (12; 112; 132) in such a way that the exhaust gas is subjected to only a small flow resistance, and **in that** a holding device (11; 130) for the mixing body and/or the mixing body (12; 112; 132) have holes which connect the spaces upstream and downstream of the mixing device.

## Revendications

1. Dispositif de mélange destiné à mélanger le gaz d'échappement d'un moteur à combustion interne s'écoulant dans un tuyau d'échappement (1) à un agent réducteur, comprenant un corps de mélange pouvant être disposé dans le tuyau d'échappement, le corps de mélange (12 ; 112 ; 132) présentant une surface d'impact du gaz (15 ; 115 ; 160) et une surface d'impact de jet (14 ; 114 ; 161), de sorte que du gaz d'échappement s'écoulant hors du moteur à combustion interne puisse venir frapper la surface d'impact de gaz, et que de l'agent réducteur pouvant être acheminé transversalement au flux de gaz d'échappement puisse venir frapper la surface d'impact de jet, la surface d'impact de jet et la surface d'impact de gaz formant des régions partielles distinctes de la surface du corps de mélange et la surface d'impact de jet (14 ; 114 ; 161) et la surface d'impact de gaz (15 ; 115 ; 160) se trouvant sur des côtés opposés du corps de mélange, la surface d'impact de gaz (15 ; 115) étant courbée, **caractérisé en ce que** la surface d'impact de gaz est formée par la surface d'une partie du corps de mélange (12 ; 112 ; 132) se rétrécissant centralement dans le tuyau d'échappement vers la direction d'écoulement, de telle sorte que seulement une faible résistance d'écoulement s'oppose au gaz d'échappement, et **en ce qu'**un dispositif de retenue (11 ; 130) pour le corps de mélange et/ou le corps de mélange (12 ; 112 ; 132) présentent des trous reliant les espaces avant et arrière du dispositif de mélange.

2. Dispositif de mélange selon la revendication 1, **caractérisé en ce que** le corps de mélange (12 ; 112 ; 132) présente une forme de pale.

3. Dispositif de mélange selon la revendication 1 ou 2, **caractérisé en ce que** le corps de mélange peut être disposé de telle sorte que la surface d'impact de jet (14 ; 114 ; 161) soit formée par une région de surface du corps de mélange (12 ; 112 ; 132) en aval de l'écoulement de gaz d'échappement de la surface d'impact de gaz (15, 115).

4. Dispositif de mélange selon l'une quelconque des revendications précédentes, **caractérisé en ce que** le dispositif de retenue (11, 130) et/ou le corps de mélange (12, 112, 132) sont construits à partir d'une tôle perforée.

5. Dispositif de mélange selon l'une quelconque des revendications précédentes, **caractérisé en ce que** le dispositif de retenue (11, 130) présente au moins une entretoise (130) et **en ce que** cette entretoise est réalisée sous forme courbe.

6. Dispositif de mélange selon l'une quelconque des revendications précédentes, **caractérisé en ce que** l'au moins une entretoise (130) est connectée à son extrémité opposée au corps de mélange (12, 112, 132) à une bande métallique (30) entourant le corps de mélange de manière circulaire.

7. Installation d'épuration des gaz d'échappement pour purifier les gaz d'échappement d'un moteur à combustion interne, comprenant un tuyau d'échappement (1), un dispositif d'alimentation d'agent réducteur dans le tuyau d'échappement et un dispositif de mélange pour mélanger le gaz d'échappement à l'agent réducteur, le dispositif de mélange présentant un corps de mélange pouvant être disposé dans le tuyau d'échappement, le corps de mélange (12 ; 112 ; 132) présentant une surface d'impact de gaz (15 ; 115 ; 160) et une surface d'impact de jet (14 ; 114 ; 161), de sorte que du gaz d'échappement s'écoulant hors du moteur à combustion interne puisse venir frapper la surface d'impact de gaz et que de l'agent réducteur pouvant être acheminé transversalement au flux de gaz d'échappement puisse venir frapper la surface d'impact de jet, la surface d'impact de jet et la surface d'impact de gaz formant des régions partielles distinctes de la surface du corps de mélange et la surface d'impact de jet (14 ; 114 ; 161) et la surface d'impact de gaz (15 ; 115 ; 160) se trouvant sur des côtés opposés du corps de mélange, la surface d'impact de gaz (15 ; 115) étant courbée, **caractérisé en ce que** la surface d'impact de gaz est formée par la surface d'une partie du corps de mélange (12 ; 112 ; 132) se rétrécissant centralement dans le tuyau d'échappement vers la direction d'écoulement, de telle sorte que seulement une faible résistance d'écoulement s'oppose au gaz d'échappement, et **en ce qu'**un dispositif de retenue (11 ; 130) pour le corps de mélange et/ou le corps de mélange (12 ; 112 ; 132) présentent des trous reliant les espaces avant et arrière du dispositif de mélange.
